# EUROPEAN PATENT SPECIFICATION

(11) **EP 1 501 363 B1**
(45) Date of publication and mention of the grant of the patent: **27.08.2008**
(21) Application number: 03717171.7
(22) Date of filing: 25.04.2003
(51) Int. Cl.: A01N 63/00

(54) **METHODS AND COMPOSITIONS FOR KILLING SPORES**
VERFAHREN UND ZUSAMENSETZUNGEN ZUM ABTÖTEN VON SPOREN
PROCEDES ET COMPOSITIONS SPORICIDES

(30) Priority: 25.04.2002 DK 200200625; 30.08.2002 DK 200201278
(43) Date of publication of application: 02.02.2005
(73) Proprietor: Novozymes A/S, 2880 Bagsvaerd (DK)
(72) Inventor: DANIELSEN, Steffen, DK-2100 Copenhagen Oe (DK); CHRISTENSEN, Bjorn, Eggert, DK-2880 Bagsvaerd (DK); SCHNEIDER, Palle, DK-3540 Lynge (DK)
(74) Representative: Hansen, Rasmus Rune
(86) International application number: PCT/DK2003/000273
(87) International publication number: WO 2003/090542

(56) References cited:
- WO-A-01/84937
- US-A- 4 370 199
- US-A- 4 937 072

## Description

### FIELD OF THE INVENTION

The present invention relates to enzymatic methods for killing or inactivating microbial spores.

### BACKGROUND

Spores are known to form from aerobic Bacilli, anaerobic Clostridia, selected sarcinae and a few actinomycetes. Spores resemble certain plant seeds in that they do not carry out any metabolic reactions. In this regard they are especially suited to withstand severe environmental stress and are known to survive prolonged exposures to heat, drying, radiation and toxic chemicals. These properties make spores especially difficult to kill in environments, like living tissue or objects which come in contact with living tissue, which would be adversely affected by extreme conditions.

Fungi, viruses and vegetative cells of pathogenic bacteria are sterilized within minutes at 70 degrees Celsius; many spores are sterilized at 100 degrees Celsius. However, the spores of some saprophytes can survive boiling for hours. Heat is presently the most commonly used means to insure sterilization of spores.

A particularly difficult problem relates to microbiocidal treatment of bacterial spore-forming microorganisms of the *Bacillus* cereus group.

Microorganisms of the *Bacillus* cereus group include *Bacillus cereus, Bacillus mycoides. Bacillus anthracis,* and *Bacillus thuringiensis.* These microorganisms share many phenotypical properties, have a high level of chromosomal sequence similarity, and are known enterotoxin producers.

Although all spore-forming microorganisms are problematic for microbiocidal treatments because they form spores, *Bacillus cereus* is one of the most problematic because *Bacillus cereus* has been identified as possessing increased resistance to germicidal chemicals used to decontaminate environmental surfaces.

*Bacillus cereus* is a particularly well-established enterotoxin producer and food-borne pathogen. This organism is frequently diagnosed as a cause of gastrointestinal disorders and has been suggested to be the cause of several foodbome illness outbreaks. The organism is ubiquitous in nature, and as a consequence, is present in animal feed and fodder. Due to its rapid sporulating capacity, the organism easily survives in the environment and can survive intestinal passage in cows. The organism can contaminate raw milk via feces and soil, and *Bacillus cereus* can easily survive the pasteurization process.

WO-A-01/84937 describes an enzymatic method for killing or inhibiting microbial cells with a phenol oxidising enzyme system and an enhancer. A composition containing laccase and an enhancing agent was disclosed. It did not contain iodide ions.

US-A-4370199 proposes the use of guaiacol as an enhancer for peroxidase. No enhancer for laccase is disclosed.

US-A-4937072 describes a sporicidal composition containing peroxides or peroxidases and a source of iodide ions. Laccase was not mentioned.

The present invention provides an improved enzymatic method for killing or inactivating spores.

### SUMMARY

The present invention provides as a first aspect a sporocidal composition comprising a laccase or a compound exhibiting laccase activity, a source of oxygen, a source of iodide ions and an enhancing agent.

In a second aspect is provided a method of killing or inactivating spores, comprising contacting the spores with the sporocidal composition of the invention.

In a third aspect is provided a method of decontaminating a location, which has been exposed to spores, comprising contacting the spores with the composition of the invention.

In a fourth aspect is provided a container comprising the composition of the invention, wherein the components of the composition are packaged in one or more compartments or layers.

In a fifth aspect is provided a ready-to-use sporocidal formulation comprising the composition of the invention.

In embodiments, the source of iodide may be one or more salts of iodide, such as sodium iodide or potassium iodide or mixtures thereof.

In other embodiments, the sporocidal composition of the invention further comprises a surfactant.

### DETAILED DESCRIPTION

### Laccases and Compounds Exhibiting Laccase Activity

Compounds exhibiting laccase activity may be any laccase enzyme comprised by the enzyme classification EC 1.10.3.2. as set out by the Nomenclature Committee of the International Union of Biochemistry and Molecular Biology (IUBMB), or any fragment derived therefrom exhibiting laccase activity, or a compound exhibiting a similar activity, such as a catechol oxidase (EC 1.10.3.1), an o-aminophenol oxidase (EC 1.10.3.4), or a bilirubin oxidase (EC 1.3.3.5).

Preferred laccase enzymes and/or compounds exhibiting laccase activity are enzymes of microbial origin. The enzymes may be derived from plants, bacteria or fungi (including filamentous fungi and yeasts).

Suitable examples from fungi include a laccase derivable from a strain of *Aspergillus, Neurospora,* e.g., *N. crassa, Podospora, Botrytis, Collybia, Fomes, Lentinus, Pleurotus, Trametes,* e.g., *T*. *villosa* and *T*. *versicolor, Rhizoctonia,* e.g., *R. solani, Coprinus,* e.g., *C. cinereus, C*. *comatus, C. friesii,* and *C. plicatilis, Psathyrella,* e.g., *P. condelleana, Panaeolus,* e.g., *P. papilionaceus, Myceliophthora,* e.g., *M. thermophila, Schytalidium,* e.g., *S. thermophilum, Polyporus,* e.g., *P. pinsitus, Phlebia,* e.g., *P. radita* (WO 92/01046), or *Coriolus,* e.g., C. *hirsutus* (JP 2-238885).

Suitable examples from bacteria include a laccase derivable from a strain of *Bacillus.*

A laccase derived from *Coprinus, Myceliophfhora, Polyporus, Scytalidium* or *Rhizoctonia* is preferred; in particular a laccase derived from *Coprinus cinereus, Myceliophthora thermophila, Polyporus pinsitus, Scytalidium thermophilum* or *Rhizoctonia solani.*

The laccase or the laccase related enzyme may furthermore be one which is producible by a method comprising cultivating a host cell transformed with a recombinant DNA vector which carries a DNA sequence encoding said laccase as well as DNA sequences encoding functions permitting the expression of the DNA sequence encoding the laccase, in a culture medium under conditions permitting the expression of the laccase enzyme, and recovering the laccase from the culture.

### Determination of Laccase Activity (LACU)

Laccase activity (particularly suitable for Polyporus laccases) may be determined from the oxidation of syringaldazin under aerobic conditions. The violet colour produced is photometered at 530 nm. The analytical conditions are 19 mM syringaldazin, 23 mM acetate buffer, pH 5.5, 30°C, 1 min. reaction time.

1 laccase unit (LACU) is the amount of enzyme that catalyses the conversion of 1.0 mmole syringaldazin per minute at these conditions.

### Determination of Laccase Activity (LAMU)

Laccase activity may be determined from the oxidation of syringaldazin under aerobic conditions. The violet colour produced is measured at 530 nm. The analytical conditions are 19 mM syringaldazin, 23 mM Tris/maleate buffer, pH 7.5, 30°C, 1 min. reaction time.

1 laccase unit (LAMU) is the amount of enzyme that catalyses the conversion of 1.0 mmole syringaldazin per minute at these conditions.

### Source of Oxygen

The source of oxygen required by the laccase or the compound exhibiting laccase activity may be oxygen from the atmosphere or an oxygen precursor for in situ production of oxygen. Oxygen from the atmosphere will usually be present in sufficient quantity. If more O₂ is needed, additional oxygen may be added, e.g. as pressurized atmospheric air or as pure pressurized O₂.

### Source of Iodide ions

According to the invention the source of iodide ions needed for the reaction with the laccase may be achieved in many different ways, such as by adding one or more salts of iodide. In a preferred embodiment the salt of iodide is sodium iodide or potassium iodide, or mixtures thereof.

The concentration of the source of iodide ions will typically correspond to a concentration of iodide ions of from 0.01 mM to 1000 mM, preferably from 0.05 mM to 500 mM, and more preferably from 0.1 mM to 100 mM.

### Enhancing agent

The enhancing agent may be selected from the group consisting of aliphatic, cycloaliphatic, heterocyclic or aromatic compounds containing the moiety >N-OH.

A group of preferred enhancing agents is phenolic compounds (alkylsyringates) of the general formula IV: 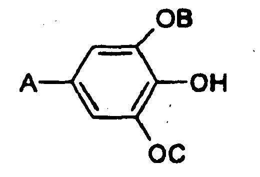 wherein the letter A in said formula denotes be a group such as -D, -CH=CH-D, -CH=CH-CH=CH-D, -CH=N-D, -N=N-O, or -N=CH-D, in which D is selected from the group consisting of -CO-E, -SO₂-E, -N-XY, and -N⁺-XYZ, in which E may be -H, -OH, -R, or -OR, and X and Y and Z may be identical or different and selected from -H and -R; R being a C₁-C₁₆ alkyl, preferably a C₁-C₈ alkyl, which alkyl may be saturated or unsaturated, branched or unbranched and optionally substituted with a carboxy, sulpho or amino group; and B and C may be the same or different and selected from CₘH₂ₘ₊₁, where m = 1, 2, 3, 4 or 5.

In the above mentioned general formula IV, A may be placed meta to the hydroxy group instead of being placed in the para-position as shown.

Yet another group of preferred enhancing agents are the compounds as described in general formula VI: 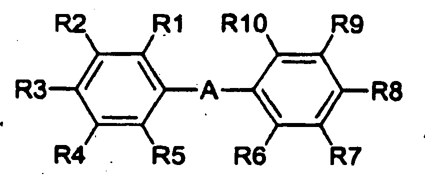 in which general formula A represents a single bond, or one of the following groups: (-Ch₂-), (-CH=CH-), (-NR11-), (-CH=N-), (-N=N-), (-CH=N-N=CH-), or (>C=O);
and in which general formula the substituent groups R1-R11, which may be identical or different, independently represents any of the following radicals: hydrogen, halogen, hydroxy, formyl, acetyl, carboxy and esters and salts hereof, carbamoyl, sulfo and esters and salts hereof, sulfamoyl, methoxy, nitro, amino, phenyl, C₁₋₈-alkyl;
which carbamoyl, sulfamoyl, phenyl, and amino groups may furthermore be unsubstituted or substituted once or twice with a substituent group R12; and which C₁₋₈-alkyl group may be saturated or unsaturated, branched or unbranched, and may furthermore be unsubstituted or substituted with one or more substituent groups R12;
which substituent group R12 represents any of the following radicals: hydrogen, halogen, hydroxy, formyl, acetyl, carboxy and esters and salts hereof, carbamoyl, sulfo and esters and salts hereof, sulfamoyl, methoxy, nitro, amino, phenyl, or C₁₋₈-alkyl; which carbamoyl, sulfamoyl, and amino groups may furthermore be unsubstituted or substituted once or twice with hydroxy or methyl.
and in which general formula R5 and R6 may together form a group -B-, in which B represents a single bond, one of the following groups (-CH₂-), (-CH=CH-), (-CH=N-); or B represents sulfur, or oxygen.

According to the invention, the enhancing agent may be present in the composition in a concentration in the range of from 0.01 mM to 1000 mM, preferably in the range of from 0.05 mM to 500 mM, more preferably in the range of from 0.1 mM to 100 mM, and most preferably in the range of from 0.1 mM to 50 mM.

### Spores

The spores which are contacted with a laccase or a compound exhibiting laccase activity, a source of oxygen, a source of iodide ions and an enhancing agent in the method of the invention comprise all kinds of spores.

In an embodiment the spores are endospores, such as all *Clostridium* sp. spores, *Brevibacillus* sp. spores and *Bacillus* sp. spores, e.g. spores from *Bacillus anthracis, Bacillus cereus, Bacillus mycoides, Bacillus thuringiensis, Bacillus subtilis, Bacillus putida, and Bacillus pumila.*

In another embodiment the' spores are exospores, such as *Actinomycetales* spores, e.g. spores from *Actinomyces* sp., *Streptomyces* sp.; *Thermoactinomyces* sp., *Saccharomonospora* sp., and *Saccharopylospora* sp.

In another embodiment the spores are bacterial spores. Examples of bacterial spores include, but are not limited to, all *Clostridium* sp. spores and *Bacillus* sp. spores as mentioned above.

In yet another embodiment the spores are fungal spores. Examples of fungal spores include (in addition to those mentioned above), conidiospores, such as spores from *Aspergillus* sp., and *Penicillium* sp.

### Surfactants

The surfactants suitable for being incorporated in the sporocidal composition may be non-ionic (including semi-polar), anionic, cationic and/or zwitterionic. The surfactants are preferably anionic or non-ionic. The surfactants are typically present in the sporocidal composition at a concentration of from 0.01 % to 10% by weight.

When included therein, the sporocidal composition will usually contain from about 0.01% to about 10%, preferably about 0.05% to about 5%, and more preferably about 0.1% to about 1% by weight of an anionic surfactant, such as linear alkylbenzenesulfonate, alpha-olefinsulfonate, alkyl sulfate (fatty alcohol sulfate), alcohol ethoxysulfate, secondary alkanesulfonate, alpha-sulfo fatty acid methyl ester, alkyl- or alkenylsuccinic acid or soap.

When included therein the sporocidal composition will usually contain from about 0.01% to about 10%, preferably about 0.05% to about 5%, and more preferably about 0.1 % to about 1% by weight of a non-ionic surfactant, such as alcohol ethoxylate, nonylphenol ethoxylate, alkylpolyglycoside, alkyldimethylamineoxide, ethoxylated fatty acid monoethanolamide, fatty add monoethanolamide, polyhydroxy alkyl fatty acid amide, or N-acyl N-alkyl derivatives of glucosamine ("glucamides").

### Compositions

The present invention provides a composition comprising a laccase or a compound exhibiting laccase activity, a source of oxygen, a source of iodide ions and an enhancing agent.

The laccase or the compound exhibiting laccase activity, the source of iodide ions and the enhancing agent may be formulated as a liquid (e.g. aqueous), a solid, a gel, a paste or a dry product formulation. The dry product formulation may subsequently be re-hydrated to form an active liquid or semi-liquid formulation usable in the method of the invention.

When the laccase or the compound exhibiting laccase activity, the source of iodide ions and the enhancing agents are formulate as a dry formulation, the components may be mixed, arranged in discrete layers or packaged separately.

When formulated as a solid, all components may be mixed together, e.g., as a powder, a granulate or a gelled product.

When other than dry form compositions are used and even in that case, it is preferred to use a two-part formulation system having the enzyme(s) separate from the rest of the composition.

The composition of the invention may further comprise auxiliary agents such as wetting agents, thickening agents, buffer, stabilisers, perfume, colourants, fillers and the like.

Useful wetting agents are surfactants, i.e. non-ionic, anionic, amphoteric or zwitterionic surfactants. Surfactants are further described above.

The composition of the invention may be a concentrated product or a ready-to-use product. In use, the concentrated product is typically diluted with water to provide a medium having an effective sporocidal activity, applied to the object to be cleaned or disinfected, and allowed to react with the spores present.

The pH of an aqueous solution of the composition is in the range of from pH 2 to 11, preferably in the range of from pH 3 to 10.5, more preferably in the range of from pH 4 to 10, most preferably in the range of from pH 5 to 9, and in particular in the range of from pH 6 to 8.

### Methods and Uses

The present invention provides an enzymatic method for killing or inactivating spores, comprising contacting the spores with a laccase or a compound exhibiting laccase activity, a source of oxygen, a source of iodide ions and an enhancing agent.

In the context of the present invention the term "killing or inactivating spores" is intended to mean that at least 99% of the spores are not capable of transforming (germinating) into vegetative cells. Preferably 99.9% (more preferably 99.99% and most preferably 99.999%) of the spores are not capable of transforming into vegetative cells.

The spores may be contacted by the composition of the invention at a temperature between 0 and 90 degrees Celsius, preferably between 5 and 80 degrees Celsius, more preferably between 10 and 70 degrees Celsius, even more preferably between 15 and 60 degrees Celsius, most preferably between 18 and 50 degrees Celsius, and in particular between 20 and 40 degrees Celsius.

The composition of the invention is suitable for killing or inactivating spores in a variety of environments. The composition of the invention may desirably be used in any environment to reduce spore contamination, such as the health-care industry (e.g. animal hospitals, human hospitals, animal clinics, human clinics, nursing homes, day-care facilities for children or senior citizens, etc.), the food industry (e.g. restaurants, food-processing plants, food-storage plants, grocery stores, etc.), the hospitality industry (e.g. hotels, motels, resorts, cruise ships, etc.), the education industry (e.g. schools and universities), etc.

The composition of the invention may desirably be used in any environment to reduce spore contamination, such as general-premise surfaces (e.g. floors, walls, ceilings, exterior of furniture, etc.), specific-equipment surfaces (e.g. hard surfaces, manufacturing equipment, processing equipment, etc.), textiles (e.g. cottons, wools, silks, synthetic fabrics such as polyesters, polyolefins, and acrylics, fiber blends such as cotton polyester, etc.), wood and cellulose-based systems (e.g. paper), soil, animal carcasses (e.g. hide, meat, hair, feathers, etc.), foodstuffs (e.g. fruits, vegetables, nuts, meats, etc.), and water.

In one embodiment, the method of the invention is directed to sporocidal treatment of textiles. Spores of the *Bacillus cereus* group have been identified as the predominant postlaundering contaminant of textiles. Thus, the treatment of textiles with a composition of the invention is particularly useful for sporocidal activity against the contaminants of textiles.

Examples of textiles that can be treated with the composition of the invention include, but are not limited to, personal items (e.g. shirts, pants, stockings, undergarments, etc.), institutional items (e.g. towels, lab coats, gowns, aprons, etc.), hospitality items (e.g. towels, napkins, tablecloths, etc.).

A sporocidal treatment of textiles with a composition of the invention may include contacting a textile with a composition of the invention. This contacting can occur prior to laundering the textile. Alternatively, this contacting can occur during laundering of the textile to provide sporocidal activity and optionally provide cleansing activity to remove or reduce soils, stains, etc. from the textile.

The spores which are contacted by the composition of the invention may be situated on any surface including, but not limited to, a surface of a process equipment used in e.g. a dairy, a chemical or pharmaceutical process plant, a piece of laboratory equipment, a water sanitation system, an oil processing plant, a paper pulp processing plant, a water treatment plant, or a cooling tower. The composition of the invention should be used in an amount, which is effective for killing or inactivating the spores on the surface in question.

The spores may be contacted with the composition of the invention by submerging the spores in an aqueous formulation of the composition (e.g. a laundering process), by spraying the composition onto the spores, by applying the composition to the spores by means of a cloth, or by any other method recognized by the skilled person. Any method of applying the composition of the invention to the spores, which results in killing or inactivating the spores, is an acceptable method of application.

The method of the invention is also useful for decontamination of locations which have been exposed to spores (e.g. pathogenic spores), such as biological warfare agents, e.g. spores of *Bacillus anthrasis* capable of causing anthrax. Such locations include, but are not limited to, clothings (such as army clothings), inner and outer parts of vehicles, inner and outer parts of buildings, any kind of army facility, and any kind of environment mentioned above.

The present invention is further described by the following examples.

### EXAMPLES

Chemicals used as buffers and substrates were commercial products of at least reagent grade.

### EXAMPLE 1

### Production of Spores

A Tryptose Blod Agar Base (TBAB) plate was streaked from a fresh culture of *Bacillus thuringiensis* (*B. thuringiensis* type strain ATCC10792). The culture was incubated overnight at 30 degrees Celsius.

A loopfull of pure *B. thuringiensis* cells from the TBAB plate was suspended in 2 ml of sterile water. 2xSG plates were each inoculated with 100 microliter of the cell suspension. The composition of 2xSG was as follows: 16 g/L Difco Bacto Nutrient Broth, 0.5 g/L MgSO₄ x 7H₂O, 2.0 g/L KCl,1.0 ml/100 ml of 10% glucose, 0.1 ml/100 ml of 1 M Ca(NO₃)_{2,} 0.1 ml/100 ml of 0.1 M MnSO₄, 10 microliter/100 ml of 0.01 M FeSO_{4,} and 1% Difco Bacto Agar.

Plates were incubated for 48-72 hrs. at 30 degrees Celsius. Sporulation was checked with phase-contrast microscopy. Spores. are phase-bright.

When sporulation efficiency was close to 100%, the cell lawn was harvested with water and the cells were suspended by intensive vortexing. Cells were collected by centrifugation for 5-10 minutes at 6000G at 4 degrees Celsius, and washed 3 times with ice cold water. The pellet contained vegetative cells and spores.

A step-density gradient was applied for separation of the spores from the vegetative cells. A centrifuge tube containing 30 ml 43% Urographin^{®} was prepared for each washed pellet. 3 ml of cell spore mixture in Urographin was prepared so that the final Urographin concentration was 20%. The 20% Urographin cell/spore mixture was gently loaded onto the top layer of the centrifuge tubes containing 43% Urographin.

The centrifuge tubes were centrifuged at 10000G at room temperature for 30 minutes. The supernatant was gently removed. The pure spore pellet was suspended in 1 ml ice-cold water and transfered to a microfuge tube. Centrifugation was continued at maximum speed for 1-2 min at 4 degrees Celsius, and the pellet was washed in ice-cold water 2 more times.

The purity and number of spores/ml was checked by phase contrast microscopy and a haemocytometer. The spores were stored suspended in water at minus 20 degrees Celsius.

*Bacillus globigii* spores were produced by following the same procedure as outlined above.

### EXAMPLE 2

### Killing of Spores

The following reagents were prepared:
DMG buffer (3,3-DiMethylGlutaric acid, Sigma D4379), 50 mM, pH adjusted to 6.5 with NaOH; *Bacillus thuringiensis* spores were re-suspended in DMG buffer to a density of 2x10⁹ spores per ml;
*Myceliophthora thermophila* laccase (as disclosed in WO 95/33836, SEQ ID NO:1; and available from Novozymes A/S) was diluted to 200 microgram per ml in DMG buffer;
*Polyporus pinsitus* laccase (as disclosed in WO 96/00290, figure 1, SEQ ID NO:1; and available from Novozymes A/S) was diluted to 200 microgram per ml in DMG buffer,
200 mM Potassium iodide (KI) solution in water,
1 mM Methylsyringate (methyl 3,5-dimethoxy-4-hydroxybenzoate, Sigma S40,944-8) solution in ethanol/DMG buffer (1:1);
3 mM MTT°(3-(4,5-Dimethylthiazol-y-2,5-diphenyltetrazolium bromide, Sigma M2128) solution in water.
   TBB growth medium:
   10 g/l Tryptose,
   3 g/l Beef Extract,
   5 g/l NaCl,
   water ad 1000 ml
   final pH 7.2 +/- 0.2.

Spore suspension was pipetted into the wells in row A of a microtiter plate. The other reagents were added as indicated in table 1 below. The reaction was initiated by the addition of laccase solution.

**Table 1.**

| Wells | DMG buffer (microliter) | Spores (microliter) | Laccase (microliter) | Kl (microliter) | Methylsyringate (microliter) |
|---|---|---|---|---|---|
| A1-A2 | 115 | 50 | 20 | 5 | 10 |
| A3-A4 | 120 | 50 | 20 | 0 | 10 |
| A5-A6 | 125 | 50 | 20 | 5 | 0 |
| R7-A8 | 145 | 50 | 0 | 5 | 0 |
| A9-A10 | 130 | 50 | 20 | 0 | 0 |
| A11-A12 | 150 | 50 | 0 | 0 | 0 |

The microtiter plate was incubated at room temperature (24 degrees Celsius) for 1 hour. 180 microliter TBB growth medium was added to all wells in rows B to H of the microliter plate. Serial 10 fold dilutions were made by pipetting 20 microliter from row A to row B, and then from row B to row C, and then from row C to row D, and so on until row H.

The microliter plate was incubated art 30 degrees Celsius for 20-24 hours to allow spores to germinate and grow. Growth was evaluated by a microplate reader and visually by "developing the growth" by addition of 5 microliter 3 mM MTT to each well. Formation of purple formazans reveals bacterial growth and thus the degree of spore inactivation. In the tables growth is indicated with a "+" symbol.

**Table 2. Results of evaluation of growth for spores treated with Myceliophthora thermophila laccase.**

| | **1** | **2** | **3** | **4** | **5** | **6** | **7** | **8** | **9** | **10** | **11** | **12** |
|---|---|---|---|---|---|---|---|---|---|---|---|---|
| A | | | | | | | | | | | | |
| B | - | - | + | + | + | + | + | + | + | + | - | + |
| C | - | - | + | + | + | + | + | + | + | + | + | + |
| D | - | - | + | + | + | + | + | + | + | + | - | + |
| E | - | - | + | + | + | + | + | + | + | + | - | + |
| F | - | - | + | + | + | + | + | + | + | + | - | + |
| G | - | - | + | - | + | + | + | + | + | + | - | + |
| H | - | - | - | - | - | - | - | - | + | + | - | - |

**Table 3. Results of evaluation of growth for spores treated with Polyporus pinsitus laccase.**

| | **1** | **2** | **3** | **4** | **5** | **6** | **7** | **8** | **9** | **10** | **11** | **12** |
|---|---|---|---|---|---|---|---|---|---|---|---|---|
| A | | | | | | | | | | | | |
| B | - | - | + | + | + | + | + | + | + | + | + | + |
| C | - | - | + | + | + | + | + | + | + | + | + | + |
| D | - | - | + | + | + | + | + | + | + | + | + | + |
| E | - | - | + | + | + | + | + | + | + | + | + | + |
| F | - | - | + | + | + | + | + | + | + | + | + | + |
| G | - | - | + | - | + | + | + | + | + | + | + | + |
| H | - | - | - | - | - | - | + | - | + | + | - | + |

The results in Tables 2 and 3 show that only the formulation added to wells A1-A2 including both laccase, potassium iodide and' enhancing agent (methylsyringate) is capable of inactivating the spores.

### EXAMPLE 3

### Killing of spores at 5-60 degrees Celsius

The following reagents were prepared:
DMG buffer (3,3-DiMethylGlutaric acid, Sigma D4379), 50 mM, pH adjusted to 6.5 with NaOH; *Bacillus thuringiensis* spores were re-suspended in DMG buffer to a density of 2x10⁹ spores per ml;
*Myceliophthora thermophila* laccase (as disclosed in WO 95/33836, SEQ ID NO:1; and available from Novozymes A/S) was diluted to 500 microgram per ml in DMG buffer,
*Coprinus cinereus* laccase (as disclosed in WO 97/08325, figure 1, SEQ ID NO:27; and available from Novozymes A/S) was diluted to 500 microgram per ml in DMG buffer,
*Rhizoctonia solanii* laccase (as disclosed in WO 95/07988, figure 4, SEQ ID NO:14; and available from Novozymes A/S) was diluted to 500 microgram per ml in DMG buffer;
*Polyporus pinsitus* laccase (as disclosed in WO 96/00290, figure 1, SEQ ID NO:1; and available from Novozymes A/S) was diluted to 500 microgram per ml in DMG buffer,
200 mM Potassium iodide (KI) solution in water;
1 mM Methylsyringate (methyl 3,5-dimethoxy-4-hydroxybenzoate, Sigma S40,944-8) solution in ethanol/DMG buffer (1:1);
3 mM MTT (3-(4,5-Dimethylthiazol-yl)-2,5-diphenyltetrazolium bromide, Sigma M2128) solution in water.
   TBB growth medium:
   10 g/l Tryptose,
   3 g/l Beef Extract,
   5 g/l NaCl,
   water ad 1000 ml
   final pH 7.2 +/- 0.2.

Spore suspension was pipetted into the wells in row A of all microliter plates. The other reagents were added as indicated in table 4 below. The reaction was initiated by the addition of laccase solution. The microtiter plates were then incubated at the specified temperature for 1 hour.

180 microliter TBB growth medium was added to all wells in rows B to H of the microtiter plates.

Serial 10 fold dilutions were made by pipetting 20 microliter from row A to row B, and then from row B to row C, and then from row C to row D, and so on until row H.

**Table 4. Microtiter plate setup- each plate was used to test two laccases at one temperature.**

| Wells | DMG buffer (microliter) | Spores (microliter) | Laccase (microliter) | KI (microliter) | Methylsyringate (microliter) |
|---|---|---|---|---|---|
| A1-A3 | 166 | 50 | 15 | 6.25 | 12.5 |
| A4-A6 | 200 | 50 | 0 | 0 | 0 |
| A7-A9 | 166 | 50 | 15 | 6.25 | 12.5 |
| A10-A12 | 200 | 50 | 0 | 0 | 0 |

The microtiter plates were incubated at 30 degrees Celsius for 20-24 hours to allow spores to germinate and grow. Growth was evaluated by a microplate reader and visually by "developing the growth" by addition of 5 microliter 3 mM MTT to each well. Formation of purple formazans reveals bacterial growth and thus the degree of spore inactivation. The sporocidal potential. was calculated as the difference of the number of dilution steps with bacterial growth between the control and the laccase/iodide/methylsyringate containing wells. The sporocidal potential is measured in log units (log U) - one log unit equals a difference in growth of one 10-fold dilution step as described in Example 2.

The results from testing the four laccases at 5, 10, 15, 20, 25, 30, 35, 40, 45, 50, 55 and 60 degrees Celsius are summarised in tables 5, 6, 7 and 8.

**Table 5. Sporocidal effect of Coprinus cinereus laccase at 5-60.degrees Celsius.**

| Temperature (degrees Celsius) | 5 | 10 | 15 | 20 | 25 | 30 | 35 | 40 | 45 | 50 | 55 | 60 |
|---|---|---|---|---|---|---|---|---|---|---|---|---|
| Kill, log U | 1 | 1 | 1 | 4 | 4.5 | 4 | 4 | 4.5 | 4 | 3.5 | 3.5 | 2 |

**Table 6. Sporocidal effect of Myceliophthora thermophila laccase at 5-60 degrees Celsius.**

| Temperature (degrees Celsius) | 5 | 10 | 15 | 20 | 25 | 30 | 35 | 40 | 45 | 50 | 55 | 60 |
|---|---|---|---|---|---|---|---|---|---|---|---|---|
| Kill, log U | 0 | 3 | 3 | 3 | 5 | 5.5 | 5 | 5 | 5 | 3.5 | 3 | 3 |

**Table 7. Sporocidal effect of Polyporus pinsitus laccase at 5-60 degrees Celsius.**

| Temperature (degrees Celsius) | 5 | 10 | 15 | 20 | 25 | 30 | 35 | 40 | 45 | 50 | 55 | 60 |
|---|---|---|---|---|---|---|---|---|---|---|---|---|
| Kill, log U | 3 | 3.5 | 6 | 6.5 | 7 | 7 | 7 | 7 | 6 | 6 | 5 | 5 |

**Table 8. Sporocidal effect of Rhizoctonia solanii laccase at 5-60 degrees Celsius.**

| Temperature (degrees Celsius) | 5 | 10 | 15 | 20 | 25 | 30 | 35 | 40 | 45 | 50 | 55 | 60 |
|---|---|---|---|---|---|---|---|---|---|---|---|---|
| Kill, log U | 1 | 1.5 | 3 | 3 | 3 | 3 | 3 | 3 | 2 | 2 | 2 | 2 |

The results shown in tables 5-8 indicate that all four laccases exhibit sporocidal activity and that the optimal sporocidal effect is delivered in the temperature range 15 - 45 degrees Celsius.

### EXAMPLE 4

### Killing of spores at pH 6.0 - pH 8.0

The following reagents were prepared:
DMG buffers (3,3-DiMethylGlutaric acid, Sigma D4379), 50 mM, pH adjusted to 6.0, 6.5, 7.0, 7.5 and 8.0 with NaOH;
*Bacillus thuringiensis* spores were re-suspended in DMG buffer to a density of 2x10⁹ spores per ml;
*Myceliophthora thermophila* laccase (as disclosed in WO 95/33836, SEQ ID NO:1; and available from Novozymes A/S) was diluted to 500 microgram per ml in DMG buffer;
*Coprinus cinereus* laccase (as disclosed in WO 97/08325, figure 1, SEQ ID NO:27; and available from Novozymes A/S) was diluted to 500 microgram per ml in DMG buffer;
*Rhizoctonia solanii* laccase (as disclosed in WO 95/07988, figure 4, SEQ ID NO: 14; and available from Novozymes A/S) was diluted to 500 microgram per ml in DMG buffer,
*Polyporus pinsitus* laccase (as disclosed in WO 96/00290, figure 1, SEQ ID NO:1; and available from Novozymes A/S) was diluted to 500 microgram per ml in DMG buffer;
200 mM Potassium iodide (KI) solution in water,
1 mM Methylsyringate (methyl 3,5-dimethoxy-4-hydroxybenzoate, Sigma S40,944-8) solution in ethanol/DMG buffer (1:1);
3 mM MTT (3-(4,5-Dimethylthiazol-yl)-2,5-diphenyltetrazolium bromide, Sigma M2128) solution in water.
   TBB growth medium:
   10 g/l Tryptose,
   3 g/l Beef Extract,
   5 g/l NaCl,
   water ad 1000 ml
   final pH 7.2 +/- 0.2.

Spore suspension was pipetted into the wells in row A of a microtiter plate. The other reagents were added as indicated in table 9 below. The reaction was initiated by the addition of laccase solution. The microtiter plate was then incubated at 30 degrees Celsius for 1 hour. 180 microliter TBB growth medium was added to all wells in rows B to H of the microtiter plate. Serial 10 fold dilutions were made by pipetting 20 microliter from row A to row B, and then from row B to row C, and then from row C to row D, and so on until row H.

**Table 9. A microtiterptate was set up for each of the four laccases at each pH value:**

| Wells | DMG buffer (microliter) | Spores (microliter) | Laccase (microliter) | KI (microliter) | Methylsyringate (microliter) |
|---|---|---|---|---|---|
| A1-A2 | 182 | 50 | 5 | 6.5 | 6.5 |
| A3-A4 | 165.5 | 50 | 15 | 6.5 | 13 |
| A5-A6 | 188.5 | 50 | 5 | 6.5 | 0 |
| A7-A8 | 188.5 | 50 | 5 | 0 | 6.5 |
| A9-A10 | 187 | 50 | 0 | 6.5 | 6.5 |
| A11-A12 | 200 | 50 | 0 | 0 | 0 |

The microtiter plate was incubated at 30 degrees Celsius for 20-24 hours to allow spores to germinate and grow. Growth was evaluated by a microplate reader and visually by "developing the growth" by addition of 5 microliter 3 mM MTT to each well. Formation of purple formazans reveals bacterial growth and thus the degree of spore inactivation. The sporocidal potential was calculated as the difference of the number of dilution steps (with bacterial growth) between the control and the laccase/iodide/methylsyringate containing wells. The sporocidal potential is measured in log units (log U)- one log unit equals a difference in growth of one 10-fold dilution step. The results from testing the four laccases at pH 6.0 - pH 8.0 are summarised in tables 10, 11, 12 and 13.

**Table 10. Sporocidal effect of Coprinus cinerous laccase in the pH range pH 6.0 - 8.0**

| | | | | | |
|---|---|---|---|---|---|
| pH | 6.0 | 6.5 | 7.0 | 7.5 | 8.0 |
| Kill, log U | 5 | 4.5 | 3.5 | 3.5 | 2 |

**Table 11. Sporocidal effect of Myceliophthora thermophila laccase in the pH range pH 6.0 - 8.0**

| | | | | | |
|---|---|---|---|---|---|
| pH | 6.0 | 6.5 | 7.0 . | 7.5 | 8.0 |
| Kill, log U | 6 | 4 | 4.5 | 2.5 | 2 |

**Table 12. Sporocidal effect of Polyporus pinsitus laccase in the pH range pH 6.0 - 8.0**

| | | | | | |
|---|---|---|---|---|---|
| pH | 6.0 | 6.5 | 7.0 | 7.5 | 8.0 |
| Kill, log U | 7 | 7 | 5.5 | 3 | 0 |

**Table 13. Sporocidal effect of Rhizoctonia solanii laccase in the' pH range pH 6.0 - 8.0.**

| | | | | | |
|---|---|---|---|---|---|
| pH | 6.0 | 6.5 | 7.0 | 7.5 | 8.0 |
| Kill, log U | 3.5 | 3 | 3 | 2 | 0.5 |

The results in tables 10-13 demonstrate that all 4 laccases are active in the specified pH range.

### EXAMPLE 5

### Killing of spores deposited on ceramic tiles I

The following reagents were prepared:
DMG buffer (3,3-DiMethylGlutaric acid. Sigma D4379), 50 mM, pH adjusted to 6.5. with NaOH: *Bacillus thuringiensis* spores were re-suspended in DMG buffer to a density of 2x10⁹ spores per ml;
*Myceliophthora thermophila* laccase (as disclosed in WO 95/33836, SEQ ID NO: 1; and available from Novozyines A/S) was diluted to 30 mg/ml.
200 mM Potassium iodide (KI) solution in water;
10 mM Methylsyringate. (methyl 3,5-dimethoxy-4-hydroxybenzoate. Sigma S40,944-8) solution in ethanol/DMG buffer (1:1);
3 mM MTT (3-(4,5-Dimethylthiazol-yl)-2,5-diphenyltetrazolium bromide, Sigma M2128) solution in water.
TBB growth medium with agarose:
   10 g/l Tryptose,
   3 g/l Beef Extract.
   5 g/l NaCl,
   5 g/l Agarose
   water ad 1000 ml
   final pH 7.2 +/- 0.2.

Spores were diluted to 20 spores/ml; 200 spores/ml; 2000 spores/ml; 20,000 spores/ml and 200,000 spores/ml in water.
1 ml spore suspension was spread on glazed and unglazed faces of 5 x 5 cm ceramic tiles and the tiles were allowed to dry overnight at room temperature.
Tiles, each with 20; 200; 2000; 20,000 and 200,000 spores/tile were placed both the glazed side up or with the unglazed side up in 9 cm petri dishes.

The following reagents were mixed:
222 microliter *Myceliophthora thermophila* laccase solution
702 microliter Potassium iodide solution
222 microliter methylsyringate solution
2769 microliter 1,2-propanediol
26586 microliter DMG buffer, pH 6.5
- and 1400 microliter of this mixture was pipetted onto the surface of each tile and gently spread to cover the tile from corner to corner with the pipette tip. As a control, the spore inoculated tiles were treated with 1400 microliter of the control substance: 3 ml 1,2-propanediol mixed with 29 ml DMG buffer pH 6.5.

The tiles were allowed to incubate, uncovered, at room temperature (approx. 24 degrees Celsius) over night. The surface of each dry tile was covered by a thin layer of molten (approx. 45 degrees Celsius) TBB growth medium with agarose. When the agarose growth medium had solidified, the tiles were incubated in a moist chamber at 30 degrees Celsius for approx. 20 hours. Following incubation, microcolonies were revealed by adding 3 mM MTT, drop by drop, until the agarose surface of the tile was covered. After 1/2 - 2 hours live micro-colonies were seen as purple spots. In table 14 the results from a comparison of the treated tiles with control tiles are shown.

**Table 14. Decontamination of ceramic tiles seeded with Bacillus thuringiensis spores with laccase-iodide-enhancer solution.**

| Glazed face | | | Unglazed face | | |
|---|---|---|---|---|---|
| No. of spores deposited | No. of spores germinated | | No. of spores deposited | No. of spores germinated | |
| | Control | Treated | | Control | Treated |
| 20 | approx. 20 | 0 | 20 | approx. 20 | 0 |
| 200 | approx. 200 | 0 | 200 | approx. 200 | 0 |
| 2000 | too many to count | 0 | 2000 | too many to count | 0 |
| 20.000 | too many to count | 0 | 20.000 | too many to count | 0 |
| 200.000 | too many to count | 5 | 200.000 | too many to count | 14 |

The results demonstrate that spores deposited on surfaces are inactivated by the laccase system. The density of the surface deposited spores was approx. 4 x 10⁷/m².

### EXAMPLE 6

### Killing of spores deposited on ceramic tiles II

The following reagents were prepared:
DMG buffer (3.3-DiMethylGlutaric acid, Sigma D4379). 50 mM, pH adjusted to 6.5 with NaOH; ,
*Bacillus thuringiensis* spores were re-suspended in DMG buffer to a density of 2x10⁹ spores per ml;
*Myceliophthora thermophila* laccase (as disclosed in WO 95/33836, SEO ID NO:1; and available from Novozymes A/S) was diluted to 30 mg/ml.
*Polyporus pinsitus* laccase (as disclosed in WO 96/00290, figure 1, SEO ID NO:1; and available from Novozymes A/S) was diluted to 7;5 mg/ml.
200 mM Potassium iodide (KI) solution in water.
10 mM Methylsyringate (methyl 3,5-dimethoxy-4-hydroxybenzoate, Sigma S40,944-8) solution in ethanol/DMG buffer (1:1);
3 mM MTT (3-(4,5-Dimethylthiazol-yl)-2,5-diplienyltetrazolium bromide, Sigma M2128) solution in water.
TBB growth medium with agarose:
   10 g/l Tryptose,
   3 g/l Beef Extract.
   5 g/l NaCl.
   5 g/l Agarose
   water ad 1000 ml
   final pH 7.2 +/- 0.2.

Spores were diluted to approximately 5 x 10⁶ spores/ml in water.
1 ml spore suspension was spread on each glazed and unglazed face of 5 x 5 cm ceramic tiles, and the tiles were allowed to dry overnight at room temperature.

The tiles were arranged with the spore impregnated side up in 9 cm petri dishes.

Mixtures A, B, C and D were prepared by adding together the following reagents:
**A**
   5 microliter *Myceliopthora thermophila* laccase solution
   70 microliter Potassium iodide solution
   25 microliter methylsyringate solution
   270 microliter 1,2-propanediol
   2600 microliter DMG buffer, pH 6.5
   yielding a mixture with 50 microgramme/ml *Myceliopthora thermophila* laccase.
**B**
   2.5 microliter *Myceliopthora thermophila* laccase solution
   70 microliter Potassium iodide solution
   25 microliter methylsyringate solution
   270 microliter 1,2-propanediol
   2600 microliter DMG buffer, pH 6.5
   yielding a mixture with 25 microgramme/ml *Myceliopthora thermophila* laccase.
**C**
   20 microliter *Polyporus pinsitus* laccase solution
   70 microliter Potassium iodide solution
   25 microliter methylsyringate solution
   270 microliter 1,2-propanediol
   2600 microliter DMG buffer, pH 6.5
   yielding a mixture with 50 microgramme/ml *Polyporus pinsitus* laccase.
**D**
   10 microliter *Polyporus pinsitus* laccase solution
   70 microliter Potassium iodide solution
   25 microliter methylsyringate solution
   270 microliter 1,2-propanediol
   2600 microliter DMG buffer, pH 6.5
   yielding a mixture with 25 microgramme/ml *Polyporus pinsitus* laccase.

1400 microliter of the above-mentioned mixtures A, B, C or D were pipetted onto the surfaces of the tiles and gently spread to cover the tile from corner to corner with the pipette tip. As a control, the spore inoculated tiles were treated with 1400 microliter of the control substance: 270 microliter 1,2-propanediol mixed with 2700 microliter DMG buffer pH 6.5. The tiles were allowed to incubate, uncovered, at room temperature (approx. 21 degrees Celsius) over night. The surface of each dry tile was covered by a thin layer of molten (approx. 45 degrees Celsius) TBB growth medium with agarose. When the agarose growth medium had solidified, the tiles were incubated in a moist chamber at 30 degrees Celsius for approx. 20 hours. Following incubation, microcolonies were revealed by adding 3 mM MTT, drop by drop, until the agarose surface of the tile was covered. After 1/2 - 2 hours live micro-colonies were seen as purple spots. In table 15 the results from a comparison of the treated tiles with control tiles are shown.

**Table 15. Decontamination of ceramic tiles seeded with Bacillus thuringiensis spores with laccase-iodide-enhancer solution with decreasing amounts of laccase**

| Face of ceramic tile | Mixture **A** (Number of colonies) | Mixture **B** (Number of colonies) | Mixture **C** (Number of colonies) | Mixture **D** (Number of colonies) | Control (Number of colonies). |
|---|---|---|---|---|---|
| Glazed face | 10 | 11 | 0 | 1 | too many to count |
| Unglazed face | 24 | approx. 100 | 2 | 4 | too many to count |

The results demonstrate that spores deposited on surfaces are inactivated by laccase decontamination systems with low (less than 50 mg/l) laccase concentrations.

### EXAMPLE 7

### Killing of spores deposited on textile

The following reagents were prepared:
Spores were re-suspended in sterile water to a density of 6x10⁸/ml.
DMG buffer (3,3-DiMethylGlutaric acid, Sigma D4379), 50 mM, pH adjusted to 6.5 with NaOH;
DMG buffer (3,3-DiMethylGlutaric acid, Sigma D4379), 50 mM, pH adjusted to 6.0 with NaOH;
*Myceliophthora thermophila* laccase (as disclosed in WO 95/33836, SEQ ID NO:1; and available from Novozymes A/S) was diluted to 30 milligram per ml in DMG buffer,
200 mM Potassium iodide (KI) solution in water;
10 mM Methylsyringate (methyl 3,5-dimethoxy-4-hydroxybenzoate, Sigma S40.944-8) solution in Ethanol/DMG buffer (1:1);
0.1%(v/v)Tween
3 mM MTT (3-(4,5-Dimethylthiazol-yl)-2,5-diphenyltetrazolium bromide. Sigma M2128) solution in water.
   TBB growth medium:
   10 g/l Tryptose,
   3 g/l Beef Extract,
   5 g/l NaCl,
   water ad 1000 ml
   final pH 7.2 +/- 0.2.
Laccase-iodide-enhancer solution:
   37 microliter *Myceliopthora thermophila* laccase solution ,
   115 microliter Potassium iodide solution
   37 microliter methylsyringate solution
   500 microliter 1,2-propanediol
   4311 microliter DMG buffer, pH 6.0

100 microliter of the spore suspension was pipetted onto three dry *Pro-shot* Gun cleaning cotton patches, 1 1/8" x 1 1/8". The patches (patch 1, patch 2 and control) were allowed to dry overnight at room temperature.

Each of patch 1 and patch 2 were placed in a 5 cm open Petri dish and 2 ml of the laccase-iodide-enhancer solution was poured onto the patch and the open Petri dish with the patch was allowed to incubate at room temperature (approx. 24 degrees Celsius) for 24 hours. A patch (control) treated with a 500 microliter 1,2-propanediol in 4500 microliter DMG buffer pH 6.5 was used as a control.

The almost-dry patches were transferred to 50 ml screwcapped disposable centrifuge tubes containing 10 ml 0.1% (v/v) Tween. The tubes were immersed in an ultrasound (Branson) cleaning bath for 30 minutes at room temperature.

100 microliter of the fluid from the ultrasound treated centrifuge tubes were pipetted to wells in row A in a microliter plate according to table 16.

**Table 16. Microtiter plate setup.**

| Wells | Laccase-iodide-enhancer | Laccase-iodide-enhancer | Control (microliter) |
|---|---|---|---|
| | Patch 1 | Patch 2 | |
| | (microliter) | (microliter) | |
| A1-A4 | 100 | 0 | 0 |
| A5-A8 | 0 | 100 | 0 |
| A9-12 | 0 | 0 | 100 |

180 microliter TBB growth medium was added to all wells in rows B to H of the microtiter plate. Serial 10 fold dilutions were made by pipetting 20 microliter from row A to row B, and then from row B to row C, and then from row C to row D, and so on until row H. Then 150 microliter TBB was pipetted into the wells in row A

The microtiter plate was incubated at 30 degrees Celsius for 12-24 hours to allow spores to germinate and grow. Growth was evaluated by a microplate reader and visually by "developing the growth" by addition of 5 microliter 3 mM MTT to each well. Formation of purple formazans reveals bacterial growth and thus the degree of spore inactivation.

**Table 17. Results of evaluation of growth.**

| | 1 | 2 | 3 | 4 | 5 | 6 | 7 | 8 | 9 | 10 | 11 | 12 |
|---|---|---|---|---|---|---|---|---|---|---|---|---|
| A | - | - | - | - | - | - | - | - | + | + | + | + |
| B | + | + | + | + | - | - | - | - | + | + | + | + |
| C | - | - | - | - | - | - | - | - | + | + | + | + |
| D | - | - | - | - | - | - | - | - | + | + | - | - |
| E | - | - | - | - | - | - | - | - | + | + | - | - |
| F | - | - | - | - | - | - | - | - | - | - | + | + |
| G | - | - | - | - | - | - | - | - | - | - | - | - |
| H | - | - | - | - | - | - | - | - | - | - | - | - |

The results in Table 17 show that only the spore containing patches treated with both laccase, potassium iodide and enhancing agent (methylsyringate) are effectively disinfected.

### EXAMPLE 8

### Thiosulphate quenching of the sporocidal effect

The following reagents were prepared:
DMG buffer (3,3-DiMethylGlutaric acid, Sigma D4379), 50 mM, pH adjusted to 6.5 with NaOH;
*Bacillus thuringiensis* Spores were re-suspended in DMG buffer to a density of **2x10⁹** spores per ml;
*Myceliophthora thermophila* laccase (as disclosed in WO 95/33836, SEQ ID NO: 1; and available from Novozymes A/S) was diluted to 6000 microgram per ml in DMG buffer:
200 mM Potassium iodide (KI) solution in water;
1 mM Methylsyringate (methyl 3,5-dimethoxy-4-hydroxybenzoate, Sigma S40,944-8) solution in ethanol/DmG buffer (1:1);
Sterile water;
10%(W/V) sodium thiosulphate;
3 mM MTT (3-(4.5-Dimethylthiazol-yl)-2,5-diphenyltetrazolium bromide, Sigma M2128) solution in water.
   TBB growth medium:
   10 g/l Tryptose,
   3 g/l Beef Extract,
   5 g/l NaCl,
   water ad 1000 ml
   final pH 7.2 +/- 0.2.

Spore suspension was pipetted into the wells in row A of 5 microtiter plates. The other reagents were added as indicated in table 18 below. The reaction was initiated by the addition of laccase solution. The microtiter plates was then preincubated at 30 degrees Celsius for the specified times: one for 15 minutes, one for 30 minutes, one for 1 hour, one for 2 hours and one for 22 hours.

At the end of the preincubation 50 microliter 10 % (w/v) sodium thiosulphate was added to each well in row A and the plate was allowed to incubate a further 60 minutes at room temperature (approx. 24 degrees Celsius).

**Table 18. Microliter plate setup.**

| Wells | DMG buffer (microliter) | Spores (microliter) | Laccase (microliter) | KI (microliter) | Methyl-syringate (microliter) | Sodium- Thiosulphate (microliter) (*) | Water (microliter) (*) |
|---|---|---|---|---|---|---|---|
| A1-3 | 123 | 50 | 8 | 6.25 | 12.5 | 50 | 0 |
| A4-6 | 123 | 50 | 8 | 6.25 | 12.5 | 0 | 50 |
| A7-9 | 150 | 50 | 0 | 0 | 0 | 50 | 0 |
| A10-12 | 150 | 50 | 0 | 0 | 0 | 0 | 50 |

| | | | | | | | |
|---|---|---|---|---|---|---|---|
| (*) Added after 15 and 30 minutes and after 1, 2 and 22 hours preincubation. | | | | | | | |

180 microliter TBB growth medium was added to all wells in rows B to H of the microtiter plate. Then serial 10 fold dilutions were made by pipetting 20 microliter from row A to row B, and then from row B to row C, and then from row C to row D, and so on until row H. The microtiter plates were incubated at 30 degrees Celsius for 20-24 hours to allow spores to germinate and grow. Growth was evaluated by a microplate reader and visually by "developing the growth" by addition of 5 microliter 3 mM MTT to each well. Formation of purple formazans reveals bacterial growth and thus the degree of spore inactivation. The difference in growth between the control without laccase and the laccase killing mixture, where growth can be detected, directly gives the killing potential in log units.

**Table 19. Results of evaluation of growth. 15 minutes preincubation followed by quenching.**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | + | + | + | + | + | + | + | + | + | + | + | + |
| C | + | + | + | + | + | + | + | + | + | + | + | + |
| D | + | + | + | - | - | + | + | + | + | + | + | + |
| E | + | + | + | - | - | - | + | + | + | + | + | + |
| F | + | - | + | - | - | - | + | + | + | + | + | + |
| G | - | - | - | - | - | - | + | - | + | - | + | + |
| H | - | - | - | - | - | - | - | - | - | - | + | - |

**Table 20. Results of evaluation of growth. 1 hours preincubation..**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | + | + | + | + | - | - | + | + | + | + | + | + |
| C | + | + | + | + | - | - | + | + | + | + | + | + |
| D | - | + | - | - | - | - | + | + | + | + | + | + |
| E | - | - | - | - | - | - | + | + | + | + | + | + |
| F | - | - | - | - | - | - | + | + | + | + | + | + |
| G | - | - | - | - | - | - | + | + | + | + | + | + |
| H | - | - | - | - | - | - | - | - | + | - | - | - |

**Table 21. Results of evaluation of growth. 2 hours preincubation**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | + | + | + | + | + | - | + | + | + | + | + | + |
| C | - | - | - | - | - | - | + | + | + | + | + | + |
| D | - | - | - | - | - | - | + | + | + | + | + | + |
| E | - | - | - | - | - | - | + | + | + | + | + | + |
| F | - | - | - | - | - | - | + | + | + | + | + | + |
| G | - | - | - | - | - | - | + | + | - | + | - | + |
| H | - | - | - | - | - | - | - | - | - | - | - | - |

**Table 22. Results of evaluation of growth. 4 hours preincubation.**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | - | - | - | - | - | - | + | + | + | + | + | + |
| C | - | - | - | - | - | - | + | + | + | + | + | + |
| D | - | - | - | - | - | - | + | + | + | + | + | + |
| E | - | - | - | - | - | - | + | + | + | + | + | + |
| F | - | - | - | - | - | - | + | + | + | + | + | + |
| G | - | - | - | - | - | - | - | + | + | + | + | + |
| H | - | - | - | - | - | - | - | - | - | - | - | - |

**Table 23. Results of evaluation of growth. 22 hours preincubation.**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | - | - | - | - | - | - | + | + | + | + | + | + |
| C | - | - | - | - | - | - | + | + | + | + | + | + |
| D | - | - | - | - | - | - | + | + | + | + | + | + |
| E | - | - | - | - | - | - | + | + | + | + | + | + |
| F | - | - | - | - | - | - | + | + | + | + | + | + |
| G | - | - | - | - | - | - | - | + | + | + | + | + |
| H | - | - | - | - | - | - | - | - | - | - | - | - |

Thiosulphate is known to oxidise iodide very efficiently. The spore inactivation patterns demonstrates that incubation of spores with the laccase system for more than 1 hour, results in irreversible spore inactivation.

### EXAMPLE 9

### NaOH quenching of the sporocidal effect

The following reagents were prepared:
DMG buffer (3,3-DiMethylGlutaric acid, Sigma D4379), 50 mM, pH adjusted to 6.5 with NaOH;
*Bacillus thuringiensis* spores were re-suspended in DMG buffer to a density of 2x10⁹ spores per ml;
*Myceliopthora thermophila* laccase (as disclosed in WO 95/33836, SEQ ID NO:1; and available from Novozymes A/S) was diluted to 6000 microgram per ml in DMG buffer;
200 mM Potassium iodide (Kl) solution in water;
1 mM Methylsyringate (methyl 3,5-dimethoxy-4-hydroxybenzoate, Sigma S40,944-8) solution in ethanol/DMG buffer (1:1);
Sterile water,
0.5 M Sodium hydroxide (NaOH);
0.5 M Hydrochloric Acid (HCl)
3 mM MTT (3-(4,5-Dimethylthiazol-yl)-2,5-diphenyltetrazolium bromide, Sigma M2128) solution in water.
   TBB growth medium:
   10 g/l Tryptose,
   3 g/l Beef Extract.
   5 g/l NaCl,
   water ad 1000 ml
   final pH 7.2 +/- 0.2.

Spore suspension was pipetted into the wells in row A of five microtiter plates. The other reagents were added as indicated in table 24 below. The reaction was initiated by the addition of laccase solution. The five microtiter plates were then preincubated at 30 degrees Celsius for 15 minutes, 30 minutes, 1 hour, 2 hours and 22 hours.
At the end of the incubation 25 microliter 0.5 M sodium hydroxide was added to specified wells in row A, se table 23. Following a further incubation period of 60 minutes the added NaOH was neutralized by the addition of 25 microliter 0.5 M HCl.

**Table 24. Microtiter plate setup.**

| Wells | DMG buffer (microliter) | Spores (microliter) | Laccase(microliter) | Kl (microliter) | Methyl-syringate (microliter) | NaOH (microliter) (*) | Water (microliter) (*) | HCl (microliter) (**) |
|---|---|---|---|---|---|---|---|---|
| A1-3 | 123 | 50 | 8 | 6.25 | 12.5 | 25 | 0 | 25 |
| A4-6 | 123 | 50 | 8 | 6.25 | 12.5 | 0 | 50 | 0 |
| A7-9 | 150 | 50 | 0 | 0 | 0 | 25 | 0 | 25 |
| A10-12 | 150 | 50 | 0 | 0 | 0 | 0 | 50 | 0 |

| | | | | | | | | |
|---|---|---|---|---|---|---|---|---|
| (*) Added after 15, 30 minutes and after 1 hour 2 hours and 22 hours preincubation. (**) added after 60 minutes incubation with NaOH. | | | | | | | | |

180 microliter TBB growth medium was added to all wells in rows B to H of the microtiter plate. Then serial 10 fold dilutions were made by pipetting 20 microliter from row A to row B, and then from row B to row C, and then from row C to row D, and so on until row H.

The microtiter plates were incubated at 30 degrees Celsius for 20-24 hours to allow spores to germinate and grow. Growth was evaluated by a microplate reader and visually by "developing the growth" by addition of 5 microliter 3 mM MTT to each well. Formation of purple formazans reveals bacterial growth and thus the degree of spore inactivation

**Table 25. Inactivation of spores by the laccase system. 15 minutes preincubation**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | + | + | + | + | + | + | + | + | + | + | + | + |
| C | + | + | + | + | + | + | + | + | + | + | + | + |
| D | + | + | + | + | + | + | + | + | + | + | + | + |
| E | + | + | + | - | + | - | + | + | + | + | + | + |
| F | + | - | - | - | - | - | + | + | + | + | + | + |
| G | - | - | - | - | - | - | + | + | + | + | - | - |
| H | - | - | - | - | - | - | - | - | - | - | - | - |

**Table 26. Inactivation of spores by the laccase system. 1 hour preincubation**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | + | + | + | + | + | + | + | + | + | + | + | + |
| C | + | + | + | + | - | - | + | + | + | + | + | + |
| D | + | - | + | - | - | + | + | + | + | + | + | + |
| E | - | - | - | - | - | - | + | + | + | + | + | + |
| F | - | - | - | - | - | - | + | + | + | + | + | + |
| G | - | - | - | - | - | - | + | + | + | + | + | + |
| H | - | - | - | - | - | - | - | - | + | - | + | - |

**Table 27. Inactivation of spores by the laccase system. 2 hours preincubation**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | + | + | + | - | - | - | + | + | + | + | + | + |
| C | - | + | - | - | - | - | + | + | + | + | + | + |
| D | - | - | - | - | - | - | + | + | + | + | + | + |
| E | - | - | - | - | - | - | + | + | + | + | + | + |
| F | - | - | - | - | - | - | + | + | + | + | + | + |
| G | - | - | - | - | - | - | + | + | + | + | + | - |
| H | - | - | - | - | - | - | + | - | - | - | - | - |

**Table 28. Inactivation of spores by the laccase system. 4 hours preincubation**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | - | - | + | - | - | - | + | + | + | + | + | + |
| C | - | - | - | - | - | - | + | + | + | + | + | + |
| D | - | - | - | - | - | - | + | + | + | + | + | + |
| E | - | - | - | - | - | - | + | + | + | + | + | + |
| F | - | - | - | - | - | - | + | + | + | + | + | + |
| G | - | - | - | - | - | - | + | + | + | + | + | - |
| H | - | - | - | - | - | - | + | - | + | - | - | - |

**Table 29. Inactivation of spores by the laccase system. 22 hours preincubation.**

| | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | - | - | - | - | - | - | + | + | + | + | + | + |
| C | - | - | - | - | - | - | + | + | + | + | + | + |
| D | - | - | - | - | - | - | + | + | + | + | + | + |
| E | - | - | - | - | - | - | + | + | + | + | + | + |
| F | - | - | - | - | - | - | + | + | + | + | + | + |
| G | - | - | - | - | - | - | - | + | - | + | + | + |
| H | - | - | - | - | - | - | - | - | - | - | + | - |

Incubating spores (preincubated with laccase system) with an alkalihydroxide reverses the inactivation to some extent. The longer the laccase system acts on the spores the greater the nonreversible inactivation is obtained. Preincubation for more than 4 hours practically renders the spores unable to germinate.

## Claims

1. A sporocidal composition comprising a laccase or a compound exhibiting laccase activity, a source of oxygen, a source of iodide ions and an enhancing agent represented by: 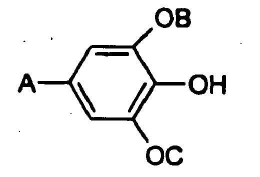 wherein the letter A in said formula represents -D, -CH=CH-D, -CH=CH-CH=CH-D, -CH=N-D, - N=N-D, or -N=CH-D, in which D is selected from the group consisting of -CO-E, -SO₂-E, -N-XY, and -N⁺-XYZ, in which E may be -H, -OH, -R, or-OR, and X and Y and Z may be identical or different and selected from -H and -R; R being a C₁-C₈ alkyl, which alkyl may be saturated or unsaturated, branched or unbranched and optionally substituted with a carboxy, sulpho or amino group; and B and C may be the same or different and selected from CₘH₂ₘ₊₁, where m = 1,2,3,4 or 5;
or 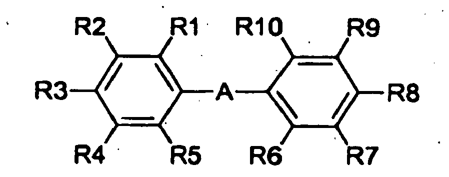 in which general formula A represents a single bond, or one of the following groups: (-CH₂-), (-CH=CH-), (-NR11-), (-CH=N-), (-N=N-), (-CH=N-N=CH-), or (>C=O); and in which general formula the substituent groups R1-R11, which may be identical or different, independently represents any of the following radicals: hydrogen, halogen, hydroxy, formyl, acetyl, carboxy and esters and salts hereof, carbamoyl, sulfo and esters and salts hereof, sulfamoyl, methoxy, nitro, amino, phenyl, C₁₋₈-alkyl; which carbamoyl, sulfamoyl, phenyl, and amino groups may furthermore be unsubstituted or substituted once or twice with a substituent group R12; and which C₁₋₈-alkyl group may be saturated or unsaturated, branched or unbranched, and may furthermore be unsubstituted or substituted with one or more substituent groups R12; which substituent group R12 represents any of the following radicals: hydrogen, halogen, hydroxy, formyl, acetyl, carboxy and esters and salts hereof, carbamoyl, sulfo and esters and salts hereof, sulfamoyl, methoxy, nitro, amino, phenyl, or C₁₋₈-alkyl; which carbamoyl, sulfamoyl, and amino groups may furthermore be unsubstituted or substituted once or twice with hydroxy or methyl; and in which general formula R5 and R6 may together form a group -B-, in which B represents a single bond, one of the following groups (-CH₂), (-CH=CH-), (-CH=N-); or B represents sulfur, or oxygen.

2. The composition of claim 1, wherein the source of iodide ions is one or more salts of iodide.

3. The composition of claim 1, which further comprises a surfactant.

4. An enzymatic method of killing or inactivating spores, comprising contacting the spores with a laccase or a compound exhibiting laccase activity, a source of oxygen, a source of iodide ions and an enhancing agent represented by: 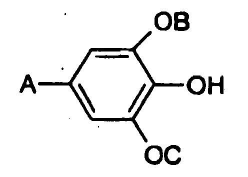 wherein the letter A in said formula represents -D, -CH=CH-D, -CH=CH-CH=CH-D_{.} -CH=N-D, - N=N-D, or -N=CH-D, in which D is selected from the group consisting of -CO-E, -SO₂-E, -N-XY, and -N⁺-XYZ, in which E may be -H, -OH, -R, or -OR, and X and Y and Z may be Identical or different and selected from -H and -R; R being a C₁-C₈ alkyl, which alkyl may be saturated or unsaturated, branched or unbranched and optionally substituted with a carboxy, sulpho or amino group; and B and C may be the same or different and selected from CmH₂ₘ₊₁, where m = 1,2,3,4 or 5;
or 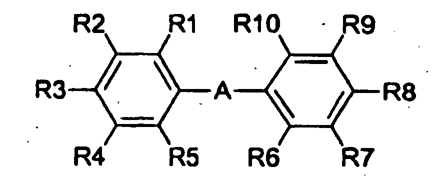 in which general formula A represents a single bond, or one of the following groups: (-CH₂-), (-CH=CH-), (-NR11-), (-CH=N-), (-N=N-), (-CH=N-N=CH-), or (>C=O); and in which general formula the substituent groups R1-R11, which may be identical or different, independently represents any of the following radicals: hydrogen, halogen, hydroxy, formyl, acetyl, carboxy and esters and salts hereof; carbamoyl, sulfo and esters and salts hereof, sulfamoyl, methoxy, nitro, amino, phenyl, C₁₋₈-alkyl; which carbamoyl, Sulfamoyl, phenyl, and amino groups may furthermore be unsubstituted or substituted once or twice with a substituent group R12; and which C₁₋₈-alkyl group may be saturated or unsaturated, branched or unbranched, and may furthermore be unsubstituted or substituted with one or more substituent groups R12; which substituent group R12 represents any of the' following radicals: hydrogen, halogen, hydroxy, formyl, acetyl, carboxy and esters and salts hereof, carbamoyl, sulfo and esters and salts hereof, sulfamoyl, methoxy, nitro, amino, phenyl, or C₁₋₈-alkyl; which carbamoyl, sulfamoyl, and amino groups may furthermore be unsubstituted or substituted once or twice with hydroxy or methyl; and In which general formula R5 and R6 may together form a group -B-, in which B represents a single bond, one of the following groups (-CH₂-), (-CH=CH-), (-CH=N-); or B represents sulfur, or oxygen.

5. The method of claim 4, wherein the source of iodide ions is one or more salts of iodide.

6. The method of claim 4, which further comprises contacting the spores with a surfactant.

7. The method of any of claims 4-6, wherein the spores are located on a surface.

8. The method of claim 7, wherein the surface is a textile surface.

9. The method of claim 7, wherein the surface is a surface of laboratory or process equipment.

## Patentansprüche

1. Sporozide Zusammensetzung, umfassend eine Laccase oder eine Verbindung, die Laccaseaktivität aufweist, eine Sauerstoffquelle, eine Iodidionenquelle und ein verstärkendes Mittel, dargestellt durch: 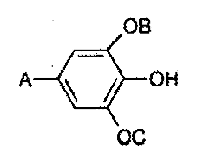 wobei der Buchstabe A dieser Formel -D, -CH=CH-D, -CH=CH-CH=CH-D, -CH=N-D, - N=N-D oder -N=CH-D darstellt, in welcher D ausgewählt ist aus der Gruppe bestehend aus -CO-E, -SO₂-E, -N-XY und -N⁺-XYZ, in welcher E -H, -OH, -R oder -OR sein kann, und X und Y und Z identisch oder unterschiedlich und aus -H und -R ausgewählt sein können; wobei R ein C₁-C₈-Alkyl ist, welches Alkyl gesättigt oder ungesättigt, verzweigt oder unverzweigt und wahlweise mit einer Carboxy-, Sulfo- oder Aminogruppe substituiert sein kann; und B und C gleich oder unterschiedlich und ausgewählt sein kann aus CₘH2ₘ₊₁, wobei m = 1, 2, 3, 4 oder 5 ist;
oder 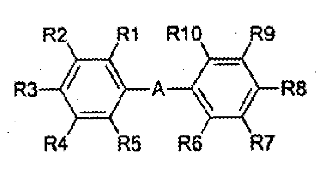 in welcher allgemeinen Formel A eine Einzelbindung darstellt, oder eine der folgenden Gruppen: (-CH₂-), (-CH=CH-), (-NR11-), (-N=N-), (-CH=N-N=CH-) oder (>C=O); und in welcher allgemeinen Formel die Substituentengruppen R1-R11, welche identisch oder unterschiedlich sein können, unabhängig einen beliebigen der folgenden Reste darstellt: Wasserstoff, Halogen, Hydroxy, Formyl, Acetyl, Carboxy und Ester und Salze hiervon, Carbamoyl, Sulfo und Ester und Salze hiervon, Sulfamoyl, Methoxy, Nitro, Amino, Phenyl, C₁₋₈-Alkyl; welche Carbamoyl, Sulfamoyl, Phenyl und Aminogruppen außerdem unsubstituiert oder einfach oder zweifach mit einer Substituentengruppe R12 substituiert sein können; und welche C₁₋₈-Alkylgruppe gesättigt oder ungesättigt, verzweigt oder unverzweigt sein kann, und außerdem unsubstituiert oder substituiert mit einer oder mehreren Substituentengruppen R12 sein kann; welche Substituentengruppe R12 einen beliebigen der folgenden Reste darstellt: Wasserstoff, Halogen, Hydroxy, Formyl, Acetyl, Carboxy und Ester und Salze hiervon, Carbamoyl, Sulfo und Ester und Salze hiervon, Sulfamoyl, Methoxy, Nitro, Amino, Phenyl oder C₁₋₈-Alkyl; welche Carbamoyl, Sulfamoyl und Aminogruppen außerdem unsubstituiert oder einfach oder zweifach mit Hydroxy oder Methyl substituiert sein können; und welcher allgemeiner Formel R5 und R6 zusammen eine Gruppe -B- ausbilden können, in welcher B eine Einzelbindung darstellt, eine der folgenden Gruppen (-CH₂-), (-CH=CH-), (-CH=N-); oder B Schwefel oder Sauerstoff darstellt.

2. Zusammensetzung nach Anspruch 1, wobei die Iodidionenquelle ein oder mehrere Salz(e) von Iodid ist/sind.

3. Zusammensetzung nach Anspruch 1, welche weiterhin ein Tensid umfasst.

4. Enzymatisches Verfahren zum Töten oder Inaktivieren von Sporen, umfassend das Inkontaktbringen der Sporen mit einer Laccase oder einer Verbindung, die Laccaseaktivität aufweist, einer Sauerstoffquelle, einer Iodidionenquelle und einem verstärkenden Mittel, dargestellt durch: 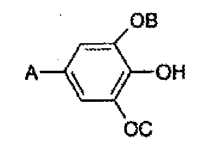 wobei der Buchstabe A in der Formel -D, -CH=CH-D, -CH=CH-CH=CH-D, -CH=N-D, -N=N-D oder -N=CH-D darstellt, in welcher D ausgewählt ist aus der Gruppe bestehend aus -CO-E, -SO₂-E, -N-XY und -N -XYZ, in welcher E -H, -OH, -R oder -OR sein kann, und X und Y und Z identisch oder unterschiedlich und aus -H und -R ausgewählt sein können; wobei R ein C₁-C₈-Alkyl ist, welches Alkyl gesättigt oder ungesättigt, verzweigt oder unverzweigt sein kann und wahlweise mit einer Carboxy-, Sulfo- oder Aminogruppe substituiert ist; und B und C gleich oder unterschiedlich und ausgewählt sein können aus CₘH₂ₘ₊₁, wobei m = 1, 2, 3, 4 oder 5 ist;
oder 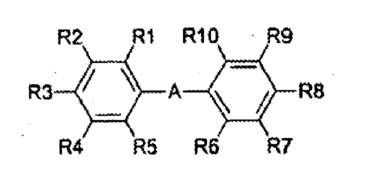 in welcher allgemeinen Formal A eine Einzelbindung darstellt, oder eine der folgenden Gruppen: (-CH₂-), (-CH=CH-), (-NR11-), (-CH=N-), (-N=N-), (-CH=N-N=CH-) oder (>C=O); und in welcher allgemeinen Formel die Substituentengruppen R1-R11, welche identisch oder unterschiedlich sein können, unabhängig einen beliebigen der folgenden Reste darstellt: Wasserstoff, Halogen, Hydroxy, Formyl, Acetyl, Carboxy und Ester und Salze hiervon, Carbamoyl, Sulfo und Ester und Salze hiervon, Sulfamoyl, Methoxy, Nitro, Amino, Phenyl, C₁₋₈-Alkyl; welche Carbamoyl, Sulfamoyl, Phenyl und Aminogruppen außerdem unsubstituiert oder einfach oder zweifach mit einer Substituentengruppe R12 substituiert sein können; und welche C₁₋₈-Alkylgruppe gesättigt oder ungesättigt, verzweigt oder unverzweigt sein kann, und außerdem unsubstituiert oder mit einer oder mehreren Substituentengruppen R12 substituiert sein kann; welche Substituentengruppe R12 einen beliebigen der folgenden Reste darstellt: Wasserstoff, Halogen, Hydroxy, Formyl, Acetyl, Carboxy und Ester und Salze hiervon, Carbamoyl, Sulfo und Ester und Salze hiervon, Sulfamoyl, Methoxy, Nitro, Amino, Phenyl oder C₁₋₈-Alkyl; welche Carbamoyl, Sulfamoyl und Aminogruppen außerdem unsubstituiert oder einfach oder zweifach mit Hydroxy oder Methyl substituiert sein können; und welcher allgemeiner Formel R5 und R6 zusammen eine Gruppe -B- ausbilden können, in welcher B eine Einzelbindung darstellt, eine der folgenden Gruppen (-CH₂-), (-CH=CH-), (-CH=N-); oder B Schwefel oder Sauerstoff darstellt.

5. Verfahren nach Anspruch 4, wobei die Iodidionenquelle ein oder mehrere Salz(e) von Iodid ist/sind.

6. Verfahren nach Anspruch 4, welches weiterhin das Inkontaktbringen der Sporen mit einem Tensid umfasst.

7. Verfahren nach einem beliebigen der Ansprüche 4 bis 6, wobei die Sporen auf einer Oberfläche lokalisiert sind.

8. Verfahren nach Anspruch 7, wobei die Oberfläche eine Textiloberfläche ist.

9. Verfahren nach Anspruch 7, wobei die Oberfläche eine Laborausrüstung oder eine Oberfläche einer Verfahrensapparatur ist.

## Revendications

1. Composition sporocide comprenant une laccase ou un composé présentant l'activité laccase, une source d'oxygène, une source d'ions iodures et un agent amplificateur représenté par : 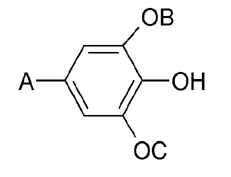 où la lettre A dans ladite formule représente -D, -CH=CH-D, -CH=CH-CH=CH-D, -CH=N-D, -N=N-D, ou -N=CH-D, où D est choisi dans le groupe constitué par -CO-E, -SO₂-E, -N-XY, et -N⁺-XYZ, où E peut être -H, -OH, -R ou -OR, et X et Y et Z peuvent être identiques ou différents et choisis parmi -H et -R ; R étant un groupe alkyle en C₁-C₈, lequel groupe alkyle peut être saturé ou insaturé, ramifié ou non ramifié et éventuellement substitué par un groupe carboxy, sulfo ou amino ; et B et C peuvent être identiques ou différents et choisis parmi CₘH₂ₘ₊₁, où m = 1,2, 3,4 ou 5 ;
ou 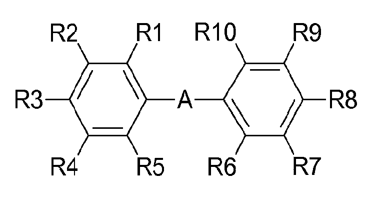 où A dans la formule générale représente une liaison simple, ou est choisi parmi les groupes suivants: (-CH₂-), (-CH=CH-), (-NR11-), (-CH=N-), (-N=N-), (-CH=N-N=CH-), ou (>C=O) ; et où dans la formule générale les groupes substituant R1 à R11, qui peuvent être identiques ou différents, représentent indépendamment n'importe quel radical suivant : hydrogène, halogène, hydroxy, formyle, acétyle, carboxy et esters et sels de celui-ci, carbamoyle, sulfo et esters et sels de celui-ci, sulfamoyle, méthoxy, nitro, amino, phényle, alkyle en C₁-C₈; lesquels groupes carbamoyle, sulfamoyle, phényle et amino peuvent en outre être non substitués ou substitués une ou deux fois par un groupe substituant R12 , et lequel groupe alkyle en C₁-C₈ peut être saturé ou insaturé, ramifié ou non ramifié, et peut en outre être non substitué ou substitué par un ou plusieurs groupes substituants R12; lequel groupe substituant R12 représente n'importe quel radical suivant : hydrogène, halogène, hydroxy, formyle, acétyle, carboxy et esters et sels de celui-ci, carbamoyle, sulfo et esters et sels de celui-ci, sulfamoyle, méthoxy, nitro, amino, phényle, ou alkyle en C₁-C₈, lesquels groupes carbamoyle, sulfamoyle, et amino peuvent en outre être non substitués ou substitués une ou deux fois par un groupe hydroxy ou méthyle ; et dans la formule générale R5 et R6 peuvent former ensemble un groupe -B-, où B représente une liaison simple, un des groupes suivants (-CH₂-), (-CH=CH-), (-CH=N-) ; ou B représente un atome de soufre ou un atome d'oxygène.

2. Composition selon la revendication 1, dans laquelle la source d'ions iodures est un ou plusieurs sels d'iodure.

3. Composition selon la revendication 1, qui comprend en outre un tensioactif.

4. Procédé enzymatique de destruction ou d'inactivation de spores, comprenant la mise en contact des spores avec une laccase ou un composé exhibant l'activité laccase, une source d'oxygène, une source d'ions iodures et un agent amplificateur représenté par : 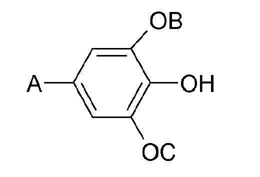 où la lettre A dans ladite formule représente -D, -CH=CH-D, -CH=CH-CH=CH-D, -CH=N-D, -N=N-D, ou -N=CH-D, où D est choisi dans le groupe constitué par -CO-E, -SO₂-E, -N-XY, et -N⁺-XYZ, où E peut être -H, -OH, -R ou -OR, et X et Y et Z peuvent être identiques ou différents et choisis parmi -H et -R ; R étant un groupe alkyle en C₁-C₈, lequel groupe alkyle peut être saturé ou insaturé, ramifié ou non ramifié et éventuellement substitué par un groupe carboxy, sulfo ou amino ; et B et C peuvent être identiques ou différents et choisis parmi CₘH₂ₘ₊₁, où m = 1,2,3,4 ou 5 ;
ou 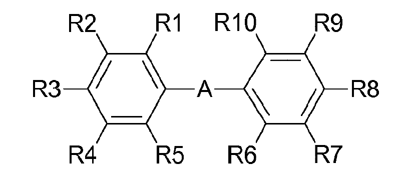 où A dans la formule générale représente une liaison simple, ou est choisi parmi les groupes suivants : (-CH₂-), (-CH=CH-), (-NR11-), (-CH=N-), (-N=N-), (-CH=N-N=CH-), ou (>C=O) ; et où dans la formule générale les groupes substituant R1 à R11, qui peuvent être identiques ou différents, représentent indépendamment n'importe quel radical suivant : hydrogène, halogène, hydroxy, formyle, acétyle, carboxy et esters et sels de celui-ci, carbamoyle, sulfo et esters et sels de celui-ci, sulfamoyle, méthoxy, nitro, amino, phényle, alkyle en C₁-C₈; lesquels groupes carbamoyle, sulfamoyle, phényle et amino peuvent en outre être non substitués ou substitués une ou deux fois par un groupe substituant R12 , et lequel groupe alkyle en C₁-C₈ peut être saturé ou insaturé, ramifié ou non ramifié, et peut en outre être non substitué ou substitué par un ou plusieurs groupes substituants R12 ; lequel groupe substituant R12 représente n'importe quel radical suivant : hydrogène, halogène, hydroxy, formyle, acétyle, carboxy et esters et sels de celui-ci, carbamoyle, sulfo et esters et sels de celui-ci, sulfamoyle, méthoxy, nitro, amino, phényle, ou alkyle en C₁-C₈, lesquels groupes carbamoyle, sulfamoyle, et amino peuvent en outre être non substitués ou substitués une ou deux fois par un groupe hydroxy ou méthyle ; et dans la formule générale R5 et R6 peuvent former ensemble un groupe -B-, où B représente une liaison simple, un des groupes suivants (-CH₂-), (-CH=CH-), (-CH=N-) ; ou B représente un atome de soufre ou un atome d'oxygène.

5. Procédé selon la revendication 4, dans lequel la source d'ions iodures est un ou plusieurs sels d'iodure.

6. Procédé selon la revendication 4, qui comprend en outre la mise en contact des spores avec un tensioactif.

7. Procédé selon l'une quelconque des revendications 4 à 6, dans lequel les spores sont situées sur une surface.

8. Procédé selon la revendication 7, dans lequel la surface est une surface textile.

9. Procédé selon la revendication 7, dans lequel la surface est une surface d'un équipement de laboratoire ou de procédé.
